# EUROPÄISCHE PATENTSCHRIFT

(11) **EP 3 911 988 B1**
(45) Veröffentlichungstag und Bekanntmachung des Hinweises auf die Patenterteilung: **06.03.2024**
(21) Anmeldenummer: 20700993.7
(22) Anmeldetag: 14.01.2020
(51) Int. Cl.: G02B 21/00, H04B 10/63

(54) **VERFAHREN UND VORRICHTUNG ZUR BESTIMMUNG VON AMPLITUDE UND/ODER PHASE EINER AUSGEWÄHLTEN FREQUENZKOMPONENTE IN EINEM DETEKTIERTEN MESSSIGNAL**
METHOD AND DEVICE FOR DETERMINING THE AMPLITUDE AND/OR PHASE OF A SELECTED FREQUENCY COMPONENT IN A DETECTED MEASUREMENT SIGNAL
PROCÉDÉ ET DISPOSITIF SERVANT À DÉFINIR L'AMPLITUDE ET/OU LA PHASE D'UNE COMPOSANTE DE FRÉQUENCE SÉLECTIONNÉE DANS UN SIGNAL DE MESURE DÉTECTÉ

(30) Priorität: 15.01.2019 DE 102019100915
(43) Veröffentlichungstag der Anmeldung: 24.11.2021
(73) Patentinhaber: Leica Microsystems CMS GmbH, 35578 Wetzlar (DE)
(72) Erfinder: BIRK, Holger, 74909 Meckesheim (DE); WIDZGOWSKI, Bernd, 69221 Dossenheim (DE)
(74) Vertreter: DehnsGermany Partnerschaft von Patentanwälten
(86) Internationale Anmeldenummer: PCT/EP2020/050758
(87) Internationale Veröffentlichungsnummer: WO 2020/148252

(56) Entgegenhaltungen:
- JP-A- 2015 072 462
- "Lock-in amplifier", Wikipedia , 12. August 2017 (2017-08-12), XP002798766, Gefunden im Internet: URL:https://web.archive.org/web/2017081202 0813/https://en.wikipedia.org/wiki/Lock-in _amplifier [gefunden am 2020-04-17]
- John M Cimbala: "Digital Data Acquisition, Page 1 Digital Data Acquisition", , 3. Oktober 2014 (2014-10-03), XP055686803, Gefunden im Internet: URL:https://www.me.psu.edu/cimbala/me345/L ectures/Digital_Data_Acquisition.pdf [gefunden am 2020-04-17]
- DAI ET AL: "Fluorescence intensity and lifetime imaging of free and micellar-encapsulated doxorubicin in living cells", NANOMEDICINE: NANOTECHNOLOGY, BIOLOGY AND MEDICINE, ELSEVIER, NL, Bd. 4, Nr. 1, 31. Januar 2008 (2008-01-31) , Seiten 49-56, XP022512447, ISSN: 1549-9634, DOI: 10.1016/J.NANO.2007.12.002
- CLEGG R M ET AL: "TIME RESOLVED IMAGING FLUORESCENCE MICROSCOPY", TIME-RESOLVED LASER SPECTROSCOPY IN BIOCHEMISTRY III,20-22 JANUARY 1992, LOS ANGELES, CA, US, BELLINGHAM, WA, US, Bd. 1640, 1. Januar 1992 (1992-01-01), Seiten 448-460, XP000472738,

## Beschreibung

Die vorliegende Erfindung betrifft ein Verfahren zur Bestimmung von Amplitude und/oder Phase einer ausgewählten Frequenzkomponente in einem detektierten Messsignal, eine Recheneinheit, ein Rastermikroskop, ein Computerprogramm und einen maschinenlesbaren Datenträger.

### Stand der Technik

In der Rastermikroskopie, insbesondere der konfokalen Mikroskopie, wird ein abzubildendes Objekt nicht in seiner Gesamtheit beleuchtet, sondern mittels eines üblicherweise von einer Laserlichtquelle abgegebenen Abtaststrahls in einer Rasterbewegung Punkt für Punkt abgetastet. Dabei ist für die Abtastung eines einzelnen Objektpunktes ein Abtastzeitintervall vorgesehen, während dessen der Abtaststrahl den jeweiligen Objektpunkt beleuchtet. Die von diesem Objektpunkt aufgrund verschiedener physikalischer, biologischer oder chemischer Vorgänge (Reflexion, Fluoreszenz, 2-Photonenstreuung, SHG, SRS, usw.) abgegebene Strahlung wird von einem geeigneten Detektor (z.B. PMT, APD, Hybrid-Detektor, Silicon-Photomultiplier, ...) erfasst und in ein Bildpunktsignal umgesetzt. Aus den Bildpunktsignalen, die für die einzelnen Objektpunkte erzeugt werden, wird schließlich ein Rasterbildsignal zusammengesetzt, auf dessen Grundlage ein das Objekt in seiner Gesamtheit abbildendes Rasterbild dargestellt werden kann. Die einzelnen Bildpunktsignale geben die Helligkeit oder Intensität der Strahlung wieder, die von einem einzelnen Objektpunkt während des zugehörigen Abtastzeitintervalls abgegeben wird.

Die DE 10 2011 000 090 B4 zeigt ein Verfahren zur rastermikroskopischen Abbildung eines Objekts, bei dem eine Vielzahl von Objektpunkten mittels eines Abtaststrahls in aufeinanderfolgenden Abtastzeitintervallen abgetastet wird, die Intensität der von dem jeweils abgetasteten Objektpunkt abgegebenen Strahlung innerhalb des zugehörigen Abtastzeitintervalls mehrmalig erfasst wird, ein Intensitätsmittelwert aus den in dem jeweils abgetasteten Objektpunkt erfassten Intensitäten als Mittelwert-Bildpunktsignal bestimmt wird und die Mittelwert-Bildpunktsignale zu einem Mittelwert-Rasterbildsignal zusammengesetzt werden.

Um außer der Intensität weitere Informationen über die Probe zu erhalten, kann der Anregungs-Lichtstrahl nach Maßgabe einer Modulationsfunktion leistungsmoduliert sein, z.B. Sinus, Rechteck usw.

Die DE 102 53 108 B4 zeigt ein Verfahren zur Detektion eines Objekts mit einem Rastermikroskop, wobei das Objekt zur Objektbeleuchtung mit leistungsmoduliertem Licht einer Lichtquelle abgerastert wird, wobei jedem Bildelement eines zu generierenden Objektbilds ein vom Rastervorgang abhängiges Zeitintervall entspricht, wobei die Leistung des vom Objekt kommenden Lichts mit einer Detektionseinrichtung detektiert wird, wobei die Detektionseinrichtung ein von der detektierten Lichtleistung abhängiges Detektionssignal erzeugt, wobei die Detektionseinrichtung in jedem Zeitintervall mindestens zweimal Detektionssignale zu einer Auswertung weiterleitet, wobei die Detektionseinrichtung in einem ersten Kanal im Wesentlichen den Anteil des in einem Zeitintervall erzeugten Detektionssignals auswertet, der der über ein Zeitintervall gemittelten Leistung des detektierten Lichts entspricht, und wobei die Detektionseinrichtung in einem zweiten Kanal im Wesentlichen den Anteil des in einem Zeitintervall erzeugten Detektionssignals auswertet, der der durch die leistungsmodulierte Objektbeleuchtung bewirkte Leistungsveränderung des detektierten Lichts entspricht, weiterleitet.

Die JP 2015 072462 A beschreibt eine Superauflösungs-Beobachtungsvorrichtung mit einem optischen Beleuchtungssystem, das Anregungslicht zur Durchführung einer Multiphotonenanregung einer in einem Objekt enthaltenen Substanz auf das Objekt konvergiert. Induktionslicht wird auf einen Bereich konvergiert, der mit dem Konvergenzbereich des Anregungslichts teilweise überlappt. Ein Modulationsteil moduliert Eigenschaften des Anregungslichts, das auf das Objekt gerichtet ist, zeitlich; und ein Erfassungsteil erfasst eine Komponente der Fluoreszenz von dem Objekt, das in dem konvergierenden Bereich des Anregungslichts und des Induktionslichts vorhanden ist, wobei sich die Komponente mit der Zeit mit einer N-fachen Frequenz der modulierten Frequenz (wobei N eine natürliche Zahl gleich oder größer 1 ist) ändert.

Zur Messung von Signalen werden Lock-In-Verstärker eingesetzt, vgl. z.B. https://en.wikipedia.org/wiki/Lock-in_amplifier Offenbarung der Erfindung

Erfindungsgemäß werden ein Verfahren zur Bestimmung von Amplitude und/oder Phase einer ausgewählten Frequenzkomponente in einem detektierten Messsignal eine Recheneinheit und ein Computerprogramm zu dessen Durchführung, ein Rastermikroskop mit Recheneinheit sowie ein Datenträger mit Computerprogramm mit den Merkmalen der unabhängigen Patentansprüche vorgeschlagen. Vorteilhafte Ausgestaltungen sind Gegenstand der Unteransprüche sowie der nachfolgenden Beschreibung.

Die Erfindung stellt einen Weg vor, wie ein Messsignal einer Detektionseinrichtung wie z.B. eines Photoelektronenvervielfachers derart ausgewertet werden kann, dass innerhalb eines Zeitintervalls für eine oder mehrere ausgewählte bzw. interessierende Frequenzkomponenten jeweils außer dem Mittelwert auch die Amplitude und Phasenlage in Bezug auf eine Grundfrequenz eines Referenzsignals verfügbar sind, ohne dass dazu aufwendigere Messmethoden nötig sind. Es handelt sich um ein sehr vorteilhaftes Lock-In-Verfahren, auch als Homodyne-Verfahren bezeichnet, das bevorzugt in einem FPGA mittels digitaler Signalverarbeitung und insbesondere ohne externen Lock-In-Verstärker realisiert werden kann. Die genannten Größen können vorteilhaft die Auswertung verbessern. Beispielsweise lässt sich aus der Phase von bestimmten Oberwellen auf eine Fluoreszenzlebensdauer schließen.

Das Objekt wird zur Objektbeleuchtung mit leistungsmoduliertem Licht einer Lichtquelle beleuchtet, wobei die Modulation nach Maßgabe eines wenigstens eine Frequenzkomponente aufweisenden Modulationssignals erfolgt. Ist das Modulationssignal ein Sinussignal, weist es demnach genau eine Frequenzkomponente (Grundfrequenz) auf, ist es ein Rechtecksignal, weist es unendlich viele Frequenzkomponente (Grundfrequenz und Oberwellen) auf. Jede Frequenzkomponente ist durch ihre Frequenz, Amplitude und Phase charakterisiert.

Die Modulation des Anregungs-Lichtstrahls kann z.B. mittels direkter Modulation einer Laserdiode, mit elektrooptischen Modulatoren oder mit akustooptischen Modulatoren erfolgen. Dabei sollte der Strahldurchmesser auf einen hinreichend kleinen Durchmesser fokussiert sein, so dass in dem Bereich, in dem der Lichtstrahl und die Schallwelle sich kreuzen, die gewünschte Modulationsfrequenz erreicht wird. Dies wird erzielt, wenn der Strahldurchmesser kleiner ist als die (vorzugsweise halbe) Schall-Modulationswellenlänge. Wäre die Modulationsfrequenz gleich dem Verhältnis aus Schallgeschwindigkeit und Strahlendurchmesser, würde genau eine Periode in den Strahldurchmesser passen und die Intensität des Lichts würde kaum moduliert. Es können auch Schwebungseffekte durch Anlegen mehrerer Frequenzen ausgenutzt werden. Auch die Verwendung von intrinsisch pulsenden Lasern, auch in Kombination mit sogenannten Pulspickern, welche gezielt einzelne Pulse herauspicken und so den Abstand der aufeinanderfolgenden Pulse erhöhen, ist angedacht.

Das von dem Objekt ausgehende Licht wird detektiert und das Messsignal wird erzeugt. Die Detektionseinrichtung kann beispielsweise ein Photoelektronenvervielfacher (Photomultiplier, PMT), z.B. auf Halbleiterbasis, insbesondere Silizium, eine Lawinenphotodiode (Avalanche-Photodiode, APD) oder ein Hybrid-Photomultiplier (hybrid (avalanche) photodiode, HPMT oder H(A)PD) sein.

Die Erfindung bedient sich einer numerischen homodynen Auswertung, wobei das Messsignal mit mindestens dem Vierfachen der Frequenz der interessierenden Frequenzkomponente überabgetastet wird, um eine Anzahl von Messwerten zu erhalten. Die Detektionseinrichtung kann beispielsweise die detektierten Photonen pro Abtastung zählen oder ein analoges Signal erzeugen, welches mit einem Analog-Digital-Wandler (ADC) mit der Abtastfrequenz erfasst wird.

Die Messwerte werden dann jeweils mit einem zum jeweiligen Messzeitpunkt vorliegenden Wert des Referenzsignals (im folgenden erstes Referenzsignal) und einem zum jeweiligen Messzeitpunkt vorliegenden Wert eines zweiten, identischen aber um 90° gegenüber dem ersten phasenverschoben Referenzsignals multipliziert, um entsprechende erste und zweite Produktsignalwerte zu erhalten.

Die Referenzsignale weisen jeweils (nur) die interessierende Frequenzkomponente auf. Ihre Amplituden sind zweckmäßigerweise auf "1" gesetzt, um die Auswertung zu vereinfachen. Es ist zu beachten, dass sich bei der Auswertung die Phase der interessierenden Frequenzkomponente relativ zur Phase des ersten Referenzsignals ergibt, so dass wiederum der Bezug der Phase des ersten Referenzsignals zur Phase des Modulationssignals berücksichtigt werden muss, um die Phase der interessierenden Frequenzkomponente relativ zur Phase des Modulationssignals zu erhalten.

Vorzugsweise wird die Phase des ersten Referenzsignals dabei - beispielsweise durch schrittweise Variation - so festgelegt, dass sich bei der Auswertung für die Phase der interessierenden Frequenzkomponente null ergibt. Dies bedeutet dann nämlich, dass die Phase der interessierenden Frequenzkomponente der Phase des ersten Referenzsignals entspricht und nicht mehr berechnet werden muss, d.h. die spätere Auswertung einer Vielzahl von Messungen wird erleichtert.

Die ersten bzw. zweiten Produktsignalwerte werden über eine ganzzahlige Anzahl von Periodendauern der Grundfrequenz aufsummiert, um einen ersten und einen zweiten Produktsummenwert zu erhalten, aus denen dann sehr einfach die Schwingungsamplitude und die Phase der interessierenden Frequenzkomponente aus dem Betrag und Winkel eines Ursprungsvektors, dessen Spitze durch den ersten und zweiten Produktsignalwert als x- und y-Koordinaten gegeben ist, berechnet werden können. Ist, wie oben angeregt, die Phase des ersten Referenzsignals so festgelegt, dass die Phase der interessierenden Frequenzkomponente null ist, ist der erste Produktsummenwert maximal und der zweite Produktsummenwert null. Um die Amplitude zu erhalten, ist der Betrag des Vektors durch die halbe Anzahl der Summanden eines Produktsummenwertes zu teilen, falls die Anzahl der Abtastungen pro Periode exakt gleich 4 ist und das Referenzsignal auf eine Amplitude von 1 normiert ist. Falls das Referenzsignal auf eine Amplitude von 1 normiert ist, erhält man, falls die Phasenverschiebung null beträgt, pro halbe Periode jeweils ein Produkt mit null und eines mit der Amplitude, somit pro Periode die doppelte Amplitude. Bei vier Abtastungen muss man also durch zwei teilen. Alternativ könnte man das Referenzsignal oder die Anzahl der Abtastungen auch so skalieren, dass man durch einen anderen Faktor teilen muss.

Vorzugsweise sind die Werte für das erste und das zweite Referenzsignal über eine Periode von 0 bis 2π vorberechnet und in einem Speicher hinterlegt ("tabelliert"), so dass sie bei der Auswertung dort einfach ausgelesen werden können. Dies beschleunigt die Auswertung signifikant. Aufgrund der Phasenverschiebung sind die Werte der beiden Referenzsignale lediglich zueinander verschoben, weisen aber denselben Verlauf auf und müssen daher auch nur einmal hinterlegt sein.

Vorzugsweise sind das erste und das zweite Referenzsignal ein Sinussignal oder ein Cosinussignal. Solche Signale liefern dieselben Werte, die man auch bei einer Fourieranalyse des Signals erhalten würde. Ihr Vorteil ist, dass sie mathematisch exakt sind. Jedoch können auch mit einer einfachen Rechteckfunktion als Referenzsignal phasenempfindlich Amplituden der Referenzfrequenz gemessen werden. Das erste Referenzsignal wäre dann z.B. eine halbe Periode gleich 1 und die zweite halbe Periode gleich -1. Das zweite Referenzsignal wäre um eine Viertel Periode verschoben. Der Vorteil solcher Referenzsignale liegt in ihrer einfacheren Berechenbarkeit.

Vorzugsweise lässt sich auch ein Mittelwert des Messsignals pro Zeitintervall sehr einfach berechnen, indem die Summe aller Messwerte im Zeitintervall gebildet wird. Das entspricht einem Referenzsignal von konstant 1. Die Summe wird anschließend noch durch die Anzahl der Summanden geteilt.

Die Erfindung eignet sich besonders vorteilhaft für Rastermikroskopieverfahren, bei denen das Objekt mit dem leistungsmodulierten Licht abgetastet wird. Soll beispielsweise dabei ein Objektbild erzeugt werden, entspricht jedem Bildpunkt des zu generierenden Objektbilds ein vom Rastervorgang abhängiges Zeitintervall. Typischerweise verweilt der Strahl auf einer dem Bildpunkt entsprechenden Position zwischen 100ns und 100µs. Das Messsignal ist daher relativ klein und verrauscht, so dass eine genaue Auswertung besonders wichtig ist. Gepulste Laser arbeiten typischerweise mit einer Frequenz um 80 MHz, wobei mittels Pulspicker Pulse herausgepickt werden können, um die Frequenz zu reduzieren, z.B. bis 10 MHz. Auch bei direkt modulierten Lasern kann meist im Bereich 1-100 MHz moduliert werden.

Eine erfindungsgemäße Recheneinheit, z.B. eine Auswerteeinheit eines Rastermikroskops, ist, insbesondere programmtechnisch, dazu eingerichtet, ein erfindungsgemäßes Verfahren durchzuführen.

Vorzugsweise weist die Recheneinheit einen Speicher auf, in dem Werte des ersten und/oder des zweiten Referenzsignals über wenigstens eine Periode des jeweiligen Signals abgelegt sind. Weiter vorzugsweise weist die Auswerteeinheit einen Eingang zur Aufnahme eines Betriebstaktsignals auf.

Die Recheneinheit ist bevorzugt als FPGA (field programmable gate array) ausgebildet. Dies erlaubt, die nötigen Berechnungsschritte besonders schnell auszuführen.

Bevorzugt wird die Betriebstaktfrequenz des FPGAs mit der Grundfrequenz der Lichtmodulation synchronisiert, um Abtast-Artefakte zu vermeiden. Dies kann sehr einfach erreicht werden, indem Recheneinheit und Lichtmodulator mit demselben Taktsignal gespeist werden. Bei der erfindungsgemäßen Vierfach-Abtastung wird beispielsweise bei einem gepulsten Laser mit 80 MHz ein Abtasttakt mit 320 MHz erzeugt. Die Abtastung erfolgt dann phasenstarr zur Anregung. Als Taktgeber kann entweder eine externe Quelle dienen, oder die Lichtquelle liefert selbst den Takt (gegeben z.B. durch Laufzeit des Lichts im Resonator eines Lasers). Diese Ausführungsform ist besonders vorteilhaft, da bei externen Lock-In-Verstärkern keine Möglichkeit besteht, die Abtastung mit der Modulationsfrequenz zu synchronisieren.

Auch die Implementierung eines erfindungsgemäßen Verfahrens in Form eines Computerprogramms mit Programmcode zur Durchführung aller Verfahrensschritte ist vorteilhaft, da dies besonders geringe Kosten verursacht, insbesondere wenn ein ausführendes Steuergerät noch für weitere Aufgaben genutzt wird und daher ohnehin vorhanden ist. Geeignete Datenträger zur Bereitstellung des Computerprogramms sind insbesondere magnetische, optische und elektrische Speicher, wie z.B. Festplatten, Flash-Speicher, EEPROMs, DVDs u.a.m. Auch ein Download eines Programms über Computernetze (Internet, Intranet usw.) ist möglich.

Weitere Vorteile und Ausgestaltungen der Erfindung ergeben sich aus der Beschreibung und der beiliegenden Zeichnung.

Die Erfindung ist anhand eines Ausführungsbeispiels in der Zeichnung schematisch dargestellt und wird im Folgenden unter Bezugnahme auf die Zeichnung beschrieben.

Figurenbeschreibung
- Figur 1: zeigt in einem Blockdiagramm eine Anordnung zur Durchführung eines erfindungsgemäßen Verfahrens.
- Figur 2: zeigt beispielhaft ein Modulationssignal und ein Messsignal über eine Periode des Modulationssignals.
- Figur 3a: zeigt beispielhaft die beiden Produktsummensignale und zugehörige Produktsummenwerte für die Grundfrequenz über eine Periode des Modulationssignals.
- Figur 3b: zeigt beispielhaft die beiden Produktsummensignale und zugehörige Produktsummenwerte für die erste Oberwelle über eine Periode des Modulationssignals.
- Figur 4: zeigt eine Übersicht über die typischen Elemente eines konfokalen Mikroskops in schematischer Ansicht.

### Detaillierte Beschreibung der Zeichnung

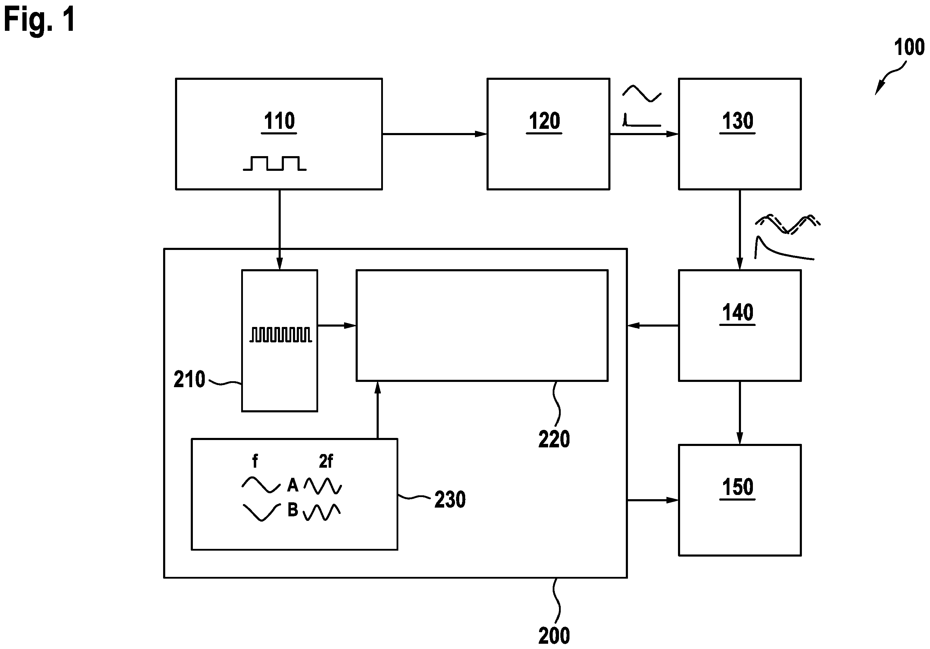

In Figur 1 ist in einem Blockdiagramm eine Anordnung 100 zur Durchführung eines erfindungsgemäßen Verfahrens gezeigt. Die Anordnung 100 weist insbesondere eine als Auswerteeinheit 200 ausgebildete Recheneinheit gemäß einer bevorzugten Ausführungsform der Erfindung auf.

Weiterhin weist die Anordnung 100 einen Taktgeber 110 zur Bereitstellung eines Betriebstaktsignals und eine Lichtquelle 120, z.B. eine Laserlichtquelle, auf, die nach Maßgabe eines Modulationssignals leistungsmoduliertes Licht beispielsweise in ein Rastermikroskop 130, in welchem sich ein zu beleuchtendes Objekt befindet, einkoppelt. Das Modulationssignal weist wenigstens eine Frequenzkomponente auf, wobei die Frequenzkomponente mit der niedrigsten Frequenz (Grundfrequenz) zweckmäßigerweise durch das Betriebstaktsignal getaktet ist. Beispielsweise kann das Modulationssignal ein Rechtecksignal, Sinussignal, oder Pulssignal mit einer Anzahl von Pulsen pro Periodendauer sein. Das leistungsmodulierte Licht bzw. das Modulationssignal ist in Figur 1 rein zur Veranschaulichung durch ein Sinussignal bzw. alternativ durch einen Puls visualisiert.

Von dem Objekt ausgehendes Licht wird in einer Detektionseinrichtung 140, z.B. einem Photoelektronenvervielfacher, detektiert. Dieses Licht ist durch einen physikalischen, biologischen oder chemischen Vorgang im Vergleich zum eingestreuten Licht verändert, was in Figur 1 rein zur Veranschaulichung durch ein phasenverschobenes Sinussignal bzw. durch einen verbreiterten Puls visualisiert ist.

Von der Detektionseinrichtung 140 wird ein Messsignal erzeugt und an die Auswerteeinheit 200 ausgegeben. Bei dem Messsignal kann es sich um ein analoges (beispielsweise Spannungs-)Signal oder um ein digitales (Zählwert-) Signal handeln.

Die Auswerteeinheit 200 ist weiterhin mit einer Mensch/Maschinen-Schnittstelle (HMI) 150, beispielsweise einem Monitor oder Touchscreen, mit oder ohne PC, verbunden, um Messergebnisse darzustellen und/oder zu speichern und/oder Einstellungen durch einen Benutzer entgegenzunehmen.

Die Auswerteeinheit 200 ist beispielsweise als FPGA ausgebildet. Innerhalb der Auswerteeinheit 200 sind ein Taktvervielfacher 210, eine Arithmetik- und Logikeinheit 220 und eine Referenzsignalerzeugungseinheit 230 dargestellt. Die Referenzsignalerzeugungseinheit 230 kann insbesondere als Speichereinheit ausgebildet sein, in der die einzelnen Referenzsignalwerte - vorzugsweise als Werte einer Sinusfunktion - über eine Periode 0 bis 2π abgespeichert sind.

Der Taktvervielfacher 210 dient dazu, aus dem vom Taktgeber 110 gelieferten Betriebstaktsignal ein Auswertetaktsignal zur Bestimmung der Überabtastung vorzugeben.

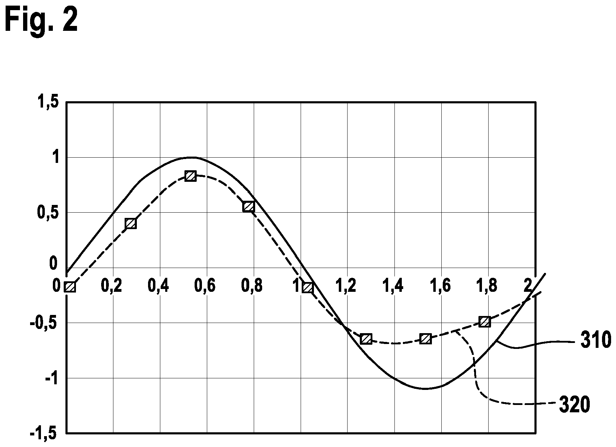

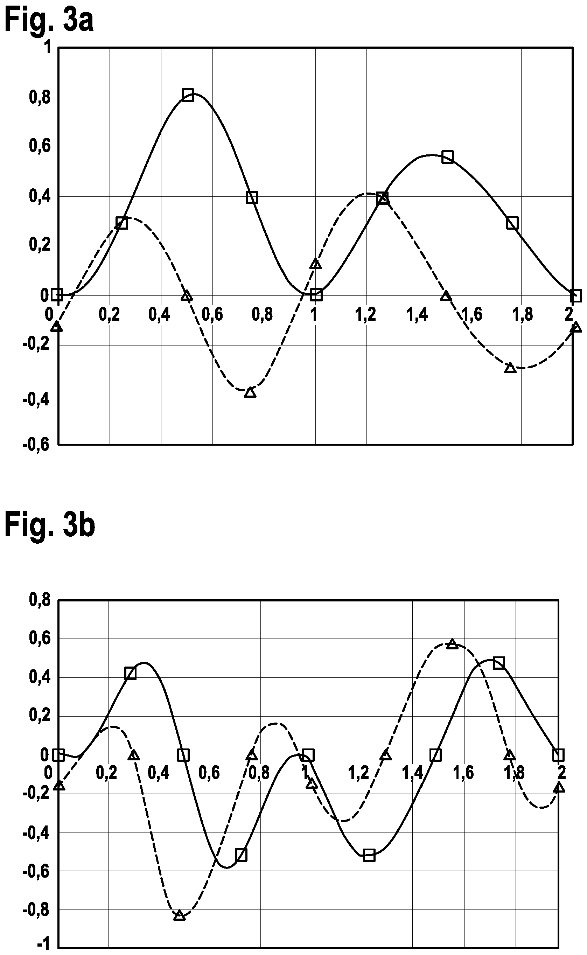

Die Arithmetik- und Logikeinheit 220 ist dazu eingerichtet, aus den ihr zugeführten Signalen Amplitude und/oder Phase einer oder mehrerer Frequenzkomponenten im Messsignal zu bestimmen, wie nachfolgend unter Verweis auf die Figuren 2 und 3 näher erläutert wird.

In Figur 2 sind beispielhaft ein Modulationssignal 310 und ein Messsignal 320 dargestellt. Bei dem Modulationssignal 310 handelt es sich um ein Sinussignal mit einer Frequenzkomponente f (Grundfrequenz) mit Amplitude = 1, Phase = 0 und Periodendauer = 2. Das Messsignal 320 weist zwei Frequenzkomponenten auf, nämlich die Grundfrequenz f mit Amplitude = 0,7 und Phase = 0 und die erste Oberwelle 2f mit Amplitude = 0,15 und Phase = -2,1.

Das Messsignal wird von der Auswerteeinheit 200 mit mindestens dem Vierfachen der Frequenz der interessierenden Frequenzkomponente überabgetastet, um eine Anzahl von Messwerten zu erhalten. Im vorliegenden Fall ist für die Auswertung der Frequenzkomponente f eine Vierfach-Überabtastung und für die Auswertung der Frequenzkomponente 2f eine Achtfach-Überabtastung, jeweils bezogen auf die Grundfrequenz nötig. Die acht beispielhaften Messwerte sind über eine Periodendauer gleichverteilt in der Figur dargestellt.

In einem nächsten Schritt werden diese acht Messwerte nun jeweils mit einem zum gleichen Zeitpunkt vorliegenden Wert eines ersten Referenzsignals (in Figur 1 z.B. A) und einem zum gleichen Zeitpunkt vorliegenden Wert eines zweiten, identischen aber um 90° gegenüber dem ersten phasenverschoben Referenzsignals (in Figur 1 z.B. B) multipliziert, um entsprechende erste und zweite Produktsignalwerte zu erhalten. Zweckmäßigerweise handelt es sich bei den Referenzsignalen jeweils um ein Sinussignal mit einer Frequenzkomponente, welche der interessierenden Frequenzkomponente entspricht. Im vorliegenden Fall erlaubt somit die Verwendung von Referenzsignalen mit der Frequenzkomponente f die Bestimmung von Amplitude und Phase der Frequenzkomponente f im Messsignal und die Verwendung von Referenzsignalen mit der Frequenzkomponente 2f die Bestimmung von Amplitude und Phase der Frequenzkomponente 2f im Messsignal. Wie erläutert, bestimmt die Höhe der Überabtastung die maximal auswertbare Frequenzkomponente.

In Figur 3a sind zur Veranschaulichung jeweils das Messsignal multipliziert mit dem ersten und zweiten Referenzsignal und die Produktsignalwerte für die Frequenzkomponente f und in Figur 3b für die Frequenzkomponente 2f dargestellt. Die Quadrate kennzeichnen jeweils die ersten Produktsignalwerte, die Dreiecke die zweiten Produktsignalwerte. Es sei betont, dass für die Auswertung nur diese Produktsignalwerte und nicht die Produktsignale insgesamt benötigt werden. Bei der numerischen Auswertung werden dementsprechend nur jeweils diese acht Werte berechnet und weiterverarbeitet.

In einem nächsten Schritt werden die jeweils acht ersten bzw. zweiten Produktsignalwerte über eine ganzzahlige Anzahl von Periodendauern der Grundfrequenz, im vorliegenden Beispiel über die dargestellte eine Periodendauer [0; 2 aufsummiert, um einen ersten und einen zweiten Produktsummenwert PSA bzw. PSB zu erhalten. Die Werte in Figur 3a ergeben beispielsweise PSA(f)=2,8 und PSB(f)=0. Die Werte in Figur 3b ergeben beispielsweise ca. PSA(2f)=-0,3 und PSB(2f)=-0,5. Dabei stellen jeweils der erste Produktsummenwert PSA die x-Koordinate und der zweite Produktsummenwert PSB die y-Koordinate der Spitze eines Ursprungsvektors dar, aus dessen Betrag und Winkel sich Amplitude bzw. Phase ergeben. Der Betrag des Vektors ist durch die halbe Anzahl der Summanden eines Produktsummenwertes zu teilen.

Somit ergeben sich vorliegend die Amplitude zu ¼*(PSA²+PSB²)^{1/2} und die Phase zu arctan2(PSB/PSA).

Man sieht, dass hinsichtlich der Frequenzkomponente f die Phasen ϕ der Referenzsignale (hier ϕ_{A(f)}=0 und ϕ_{B(f)}=π/2) bereits so vorgegeben sind, dass PSA maximal und PSB null ist. In diesem Fall entspricht die Phase ϕ_{f} der Frequenzkomponente f der Phase ϕ_{A} des ersten Referenzsignals, d.h. ϕ_{f} = ϕ_{A} = 0, und muss nicht extra berechnet werden. In analoger Weise kann dies auch für die Frequenzkomponente 2f durchgeführt werden, beispielsweise durch iterative Variation von ϕ_{A(2f)} von 0 bis 2π. Für ϕ_{A(2f)}= 2π-2,1 (bzw. -2,1) und ϕ_{B(2f)}= 2π-2,1+π/2 (bzw. - 2,1+π/2) ergeben sich PSA(2f)=0,6 und PSB(2f)=0. In diesem Fall entspricht die Phase ϕ_{f} der Frequenzkomponente f der Phase ϕ_{A} des ersten Referenzsignals, d.h. ϕ_{f} = ϕ_{A} = 2π-2,1. Auf diese Weise wird durch einmalige Vorgabe der geeigneten Phase die späteren Auswertungen signifikant beschleunigt.

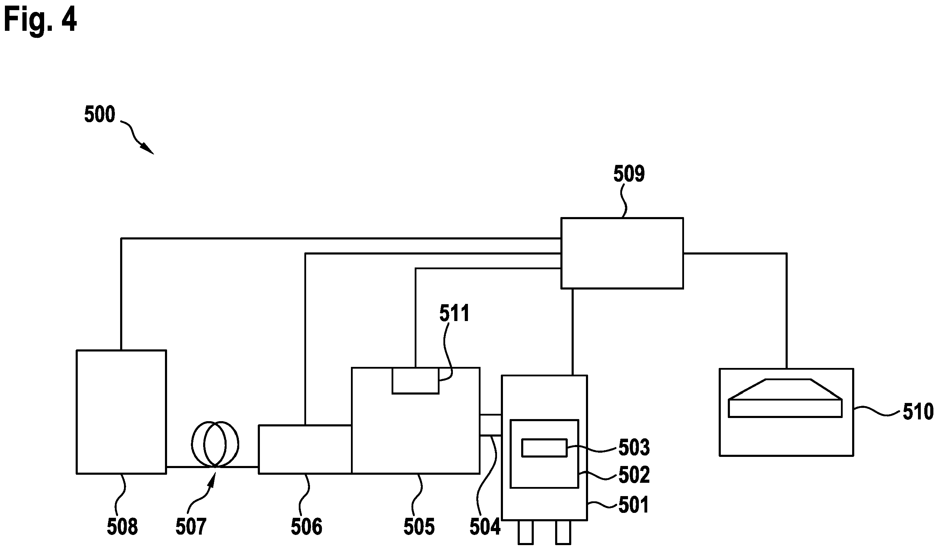

Figur 4 zeigt schematisch ein beispielhaftes Konfokalmikroskop mit typischen Komponenten. 500 bezeichnet das Gesamtsystem. Die konfokale Raster- und Detektionseinheit ist mit 505 bezeichnet. Die dazugehörige Beleuchtungseinrichtung ist mit 506 bezeichnet und direkt mit der Raster- und Detektionseinheit 505 verbunden. Es ist ebenso möglich, dass die Beleuchtungseinrichtung 506 nicht direkt mit der Raster- und Detektionseinheit 505 verbunden ist, sondern über eine Lichtleitfaser (nicht gezeigt).

Bei 508 handelt es sich um eine Laserlichtquelle, die über eine Lichtleitfaser 507 mit der Beleuchtungseinrichtung 506 verbunden ist. Alternativ kann die Laserlichtquelle 508 auch direkt mit der Beleuchtungseinrichtung 506 verbunden sein. Das Laserlicht wird nach Maßgabe eines Modulationssignals leistungsmoduliert, beispielsweise direkt bei der Erzeugung in der Laserlichtquelle 508 oder gewünschtenfalls mittels eines akustooptischen oder elektrooptischen Elements in der Beleuchtungseinrichtung 506.

504 bezeichnet einen optischen Adapter für die konfokale Raster- und Detektionseinheit 505 am Mikroskopstativ 501. Innerhalb des Stativs 501 befindet sich der Objekttisch 502 mit einer zu untersuchenden Probe 503. Eine Steuereinheit 509 steht über entsprechende Verbindungsleitungen mit den einzelnen Komponenten 508, 506, 505 und 501 in Verbindung. Ein Rechner mit Steuer- und Darstellungsprogrammen stellt eine Mensch/Maschinen-Schnittstelle dar und ist mit 510 bezeichnet; auch er steht mit der Steuereinheit 509 in Verbindung.

In der Steuereinheit 509 ist eine Auswerteeinheit 200 gemäß Figur 1 vorgesehen.

Innerhalb der konfokalen Raster- und Detektionseinheit 505 ist in einer ersten Variante ein klassischer konfokaler Strahlengang angeordnet, der in bekannter Weise mit einem einzelnen Pinhole und einem Strahlscanner, beispielsweise einem Spiegelscanner, aufgebaut ist.

In einer zweiten Variante befindet sich innerhalb der konfokalen Raster- und Detektionseinheit 505 ein Strahlengang, bei dem die Probe gleichzeitig mit einem oder mehreren oder in einer Richtung ausgedehnten Beleuchtungspunkten beleuchtet wird. Entsprechend werden die zu detektierenden Photonen beispielsweise mit einer geometrischen Anordnung von Lochblenden (Pinholes) selektiert.

Die zu untersuchende Probe 503 wird über eine Mikroskopoptik beleuchtet, sowie über dieselbe Mikroskopoptik insbesondere auf eine Sensoranordnung 511 abgebildet, die je nach Ausführungsform der konfokalen Raster- und Detektionseinheit 505 aus einem Photoelektronenvervielfacher oder einem Array von Photoelektronenvervielfachern besteht.

Die Funktionsweise eines in Figur 4 dargestellten Systems 500 ist an sich hinlänglich bekannt und soll daher vorliegend nicht erläutert werden.

## Patentansprüche

1. Verfahren zur Bestimmung von Amplitude und/oder Phase einer ausgewählten Frequenzkomponente in einem detektierten Messsignal (320),
wobei ein Objekt zur Objektbeleuchtung mit nach Maßgabe eines wenigstens eine Frequenzkomponente aufweisenden Modulationssignals (310) leistungsmoduliertem Licht einer Lichtquelle (120; 508) beleuchtet wird,
wobei die Leistung des vom Objekt kommenden Lichts mit einer Detektionseinrichtung (140) detektiert wird, wobei die Detektionseinrichtung (140) ein von der detektierten Lichtleistung abhängiges Messsignal (320) erzeugt,
wobei das Messsignal (320) über wenigstens eine einer ganzzahligen Anzahl von Grundschwingungen des Modulationssignals entsprechende Periodenlänge mit einer Abtastrate, die mindestens dem Vierfachen der Frequenz der ausgewählten Frequenzkomponente entspricht, abgetastet wird, um eine Anzahl von Messwerten zu erhalten,
wobei jeder Messwert mit einem zum jeweiligen Messzeitpunkt vorliegenden Wert eines ersten und eines zweiten Referenzsignals multipliziert wird, um jeweils einen ersten und einen zweiten Produktwert je Messwert zu erhalten,
wobei das erste Referenzsignal die ausgewählte Frequenzkomponente aufweist, wobei das zweite Referenzsignal mit dem ersten Referenzsignal identisch und zu diesem um 90° phasenverschoben ist,
wobei die ersten und die zweiten Produktwerte jeweils über die einer ganzzahligen Anzahl von Grundschwingungen des Modulationssignals entsprechende Periodenlänge aufsummiert werden, um einen ersten und einen zweiten Produktsummenwert zu erhalten,
wobei aus dem ersten und dem zweiten Produktsummenwert die Amplitude und/oder die Phase des Messsignals (220) bestimmt werden.

2. Verfahren nach Anspruch 1, wobei das Modulationssignal (310) und die Abtastung synchronisiert sind, so dass pro Periodenlänge eine feste Anzahl an Abtastungen erfolgt und die feste Anzahl mindestens 4 beträgt.

3. Verfahren nach Anspruch 1 oder 2, wobei die Amplitude als Wurzel aus der Summe der Quadrate der Produktsummenwerte, geteilt durch die halbe Anzahl der Summanden eines Produktsummenwerts bestimmt wird, und/oder wobei die Phase als arctan2-Funktionswert des Quotienten aus dem zweiten und dem ersten Produktsummenwert bestimmt wird.

4. Verfahren nach einem der Ansprüche 1 bis 3, wobei das Modulationssignal (310) ein Sinussignal, ein Cosinussignal, ein Rechtecksignal oder ein Pulssignal ist.

5. Verfahren nach einem der vorstehenden Ansprüche, wobei die Phase des ersten Referenzsignals so vorgegeben wird, dass sich für die Phase der interessierenden Frequenzkomponente null ergibt.

6. Verfahren nach einem der vorstehenden Ansprüche, wobei das erste und das zweite Referenzsignal ein Sinussignal, Cosinussignal oder Rechtecksignal sind.

7. Verfahren nach einem der vorstehenden Ansprüche, wobei ein Mittelwert des Messsignals pro Zeitintervall berechnet wird, indem die Summe aller Messwerte im Zeitintervall gebildet und durch die Anzahl der Summanden geteilt wird.

8. Verfahren nach einem der vorstehenden Ansprüche, wobei das Objekt mit dem Licht abgerastert wird.

9. Recheneinheit (200), die dazu eingerichtet ist,
ein Messsignal (320) über wenigstens eine einer ganzzahligen Anzahl von Grundschwingungen eines Modulationssignals (310) entsprechende Periodenlänge mit einer Abtastrate, die mindestens dem Vierfachen der Frequenz einer ausgewählten Frequenzkomponente entspricht, abzutasten, um eine Anzahl von Messwerten zu erhalten,
jeden Messwert mit einem zum jeweiligen Messzeitpunkt vorliegenden Wert eines ersten und eines zweiten Referenzsignals zu multiplizieren, um jeweils einen ersten und einen zweiten Produktwert je Messwert zu erhalten,
wobei das erste Referenzsignal die ausgewählte Frequenzkomponente aufweist, wobei das zweite Referenzsignal mit dem ersten Referenzsignal identisch und zu diesem um 90° phasenverschoben ist,
die ersten und die zweiten Produktwerte jeweils über die einer ganzzahligen Anzahl von Grundschwingungen des Modulationssignals entsprechende Periodenlänge aufzusummieren, um einen ersten und einen zweiten Produktsummenwert zu erhalten,
aus dem ersten und dem zweiten Produktsummenwert die Amplitude und/oder die Phase des Messsignals (220) zu bestimmen.

10. Recheneinheit (200) nach Anspruch 9 mit einer Speichereinrichtung, in der die Werte des ersten und des zweiten Referenzsignals hinterlegt sind.

11. Recheneinheit (200) nach Anspruch 9 oder 10, die als FPGA ausgebildet ist.

12. Computerprogramm, das eine Recheneinheit dazu veranlasst,
ein Messsignal (320) über wenigstens eine einer ganzzahligen Anzahl von Grundschwingungen eines Modulationssignals (310) entsprechende Periodenlänge mit einer Abtastrate, die mindestens dem Vierfachen der Frequenz einer ausgewählten Frequenzkomponente entspricht, abzutasten, um eine Anzahl von Messwerten zu erhalten,
jeden Messwert mit einem zum jeweiligen Messzeitpunkt vorliegenden Wert eines ersten und eines zweiten Referenzsignals zu multiplizieren, um jeweils einen ersten und einen zweiten Produktwert je Messwert zu erhalten,
wobei das erste Referenzsignal die ausgewählte Frequenzkomponente aufweist, wobei das zweite Referenzsignal mit dem ersten Referenzsignal identisch und zu diesem um 90° phasenverschoben ist,
die ersten und die zweiten Produktwerte jeweils über die einer ganzzahligen Anzahl von Grundschwingungen des Modulationssignals entsprechende Periodenlänge aufzusummieren, um einen ersten und einen zweiten Produktsummenwert zu erhalten,
aus dem ersten und dem zweiten Produktsummenwert die Amplitude und/oder die Phase des Messsignals (220) zu bestimmen,
wenn es auf der Recheneinheit ausgeführt wird.

13. Maschinenlesbares Speichermedium mit einem darauf gespeicherten Computerprogramm nach Anspruch 12.

14. Mikroskop mit
einer Lichtquelle (120; 508) zur Beleuchtung eines Objekts mit nach Maßgabe eines wenigstens eine Frequenzkomponente aufweisenden Modulationssignals (310) leistungsmoduliertem Licht,
einer Detektionseinrichtung (140) zur Detektion der Leistung des vom Objekt kommenden Lichts und zur Erzeugung eines von der detektierten Lichtleistung abhängigen Messsignals (220), und
einer Recheneinheit (200) nach einem der Ansprüche 9 bis 11.

15. Mikroskop nach Anspruch 14 mit einer Rastervorrichtung zum Abtasten des Objekts mit Licht.

## Claims

1. Method for determining the amplitude and/or phase of a selected frequency component in a detected measurement signal (320),
wherein an object is illuminated for object illumination with light from a light source (120; 508), the light being power-modulated in accordance with a modulation signal (310) having at least one frequency component,
wherein the power of the light coming from the object is detected by a detection device (140), wherein the detection device (140) generates a measurement signal (320) dependent on the detected light power,
wherein the measurement signal (320) is sampled over at least one period length corresponding to an integer number of fundamental oscillations of the modulation signal at a sampling rate corresponding to at least four times the frequency of the selected frequency component in order to obtain a number of measured values,
wherein each measured value is multiplied by a value of a first and a second reference signal present at the respective time of measurement in order to obtain a first and a second product value for each measured value,
wherein the first reference signal has the selected frequency component, wherein the second reference signal is identical to the first reference signal and is 90° out of phase with it,
wherein the first and second product values are each added up over the period length corresponding to an integer number of fundamental oscillations of the modulation signal in order to obtain a first and a second product sum value,
wherein the amplitude and/or the phase of the measurement signal (220) are determined from the first and the second product sum value.

2. Method according to claim 1, wherein the modulation signal (310) and the sampling are synchronised, so that a fixed number of samples is made per period length and the fixed number is at least 4.

3. Method according to claim 1 or 2, wherein the amplitude is determined as the square root of the sum of the squares of the product sum values divided by half the number of summands of a product sum value, and/or wherein the phase is determined as the arctan2 function value of the quotient of the second and the first product sum value.

4. Method according to any one of claims 1 to 3, wherein the modulation signal (310) is a sinusoidal signal, a cosine signal, a square wave signal or a pulse signal.

5. Method according to any one of the preceding claims, wherein the phase of the first reference signal is predetermined such that zero is obtained for the phase of the frequency component of interest.

6. Method according to any one of the preceding claims, wherein the first and second reference signals are a sinusoidal signal, cosine signal or square wave signal.

7. Method according to any one of the preceding claims, wherein an average value of the measurement signal per time interval is calculated by forming the sum of all measured values in the time interval and dividing it by the number of summands.

8. Method according to any one of the preceding claims, wherein the object is scanned with the light.

9. Computing unit (200), which is configured
to sample a measurement signal (320) over at least one period length corresponding to an integer number of fundamental oscillations of a modulation signal (310) at a sampling rate corresponding to at least four times the frequency of a selected frequency component in order to obtain a number of measured values,
to multiply each measured value by a value of a first and a second reference signal present at the respective time of measurement in order to obtain a first and a second product value for each measured value,
wherein the first reference signal has the selected frequency component, wherein the second reference signal is identical to the first reference signal and is 90° out of phase with it,
to add up the first and second product values each over the period length corresponding to an integer number of fundamental oscillations of the modulation signal in order to obtain a first and a second product sum value,
to determine the amplitude and/or the phase of the measurement signal (220) from the first and second product sum values.

10. Computing unit (200) according to claim 9 with a memory device in which the values of the first and second reference signals are stored.

11. Computing unit (200) according to claim 9 or 10, which is designed as an FPGA.

12. Computer programme that causes a computing unit
to sample a measurement signal (320) over at least one period length corresponding to an integer number of fundamental oscillations of a modulation signal (310) at a sampling rate corresponding to at least four times the frequency of a selected frequency component in order to obtain a number of measured values,
to multiply each measured value by a value of a first and a second reference signal present at the respective time of measurement in order to obtain a first and a second product value for each measured value,
wherein the first reference signal has the selected frequency component, wherein the second reference signal is identical to the first reference signal and is 90° out of phase with it,
to add up the first and second product values each over the period length corresponding to an integer number of fundamental oscillations of the modulation signal in order to obtain a first and a second product sum value,
to determine the amplitude and/or the phase of the measurement signal (220) from the first and second product sum values,
when it is executed on the computing unit.

13. Machine-readable storage medium with a computer program stored thereon according to claim 12.

14. Microscope with
a light source (120; 508) for illuminating an object with light being power-modulated in accordance with a modulation signal (310) having at least one frequency component,
a detection device (140) for detecting the power of the light coming from the object and for generating a measurement signal (220) dependent on the detected light power, and
a computing unit (200) according to any one of claims 9 to 11.

15. Microscope according to claim 14 with a scanning device for scanning the object with light.

## Revendications

1. Méthode de détermination de l'amplitude et/ou de la phase d'une composante de fréquence sélectionnée dans un signal de mesure (320) détecté,
dans lequel un objet est éclairé pour l'éclairage de l'objet avec a lumière d'une source lumineuse (120 ; 508) modulée en puissance en fonction d'un signal de modulation (310) présentant au moins une composante de fréquence,
dans lequel la puissance de la lumière provenant de l'objet est détectée par un dispositif de détection (140), le dispositif de détection (140) produisant un signal de mesure (320) dépendant de la puissance lumineuse détectée,
dans lequel le signal de mesure (320) est échantillonné sur au moins une longueur de période correspondant à un nombre entier d'oscillations fondamentales du signal de modulation à une fréquence d'échantillonnage qui est au moins quatre fois la fréquence de la composante de fréquence sélectionnée, afin d'obtenir un certain nombre de valeurs de mesure,
chaque valeur de mesure étant multipliée par une valeur d'un premier et d'un deuxième signal de référence présents au moment de mesure respectif, afin d'obtenir respectivement une première et une deuxième valeur de produit par valeur de mesure,
le premier signal de référence ayant la composante de fréquence sélectionnée, le deuxième signal de référence étant identique au premier signal de référence et déphasé de 90° par rapport à celui-ci,
dans lequel les première et deuxième valeurs de produit sont respectivement additionnées sur la longueur de période correspondant à un nombre entier d'oscillations fondamentales du signal de modulation afin d'obtenir une première et une deuxième valeur de somme de produit,
l'amplitude et/ou la phase du signal de mesure (220) étant déterminées à partir de la première et de la deuxième valeur de somme de produits.

2. Méthode selon la revendication 1, dans lequel le signal de modulation (310) et l'échantillonnage sont synchronisés de sorte qu'un nombre fixe d'échantillons est effectué par longueur de période et que le nombre fixe est d'au moins 4.

3. Méthode selon la revendication 1 ou 2, dans lequel l'amplitude est déterminée comme étant la racine de la somme des carrés des valeurs de somme de produits divisée par la moitié du nombre d'opérandes d'une valeur de somme de produits, et/ou dans lequel la phase est déterminée comme étant la valeur de la fonction arctan2 du quotient de la deuxième et de la première valeur de somme de produits.

4. Méthode selon l'une quelconque des revendications 1 à 3, dans lequel le signal de modulation (310) est un signal sinusoïdal, un signal cosinusoïdal, un signal carré ou un signal impulsionnel.

5. Méthode selon l'une quelconque des revendications précédentes, dans lequel la phase du premier signal de référence est prédéterminée de manière à obtenir zéro pour la phase de la composante de fréquence d'intérêt.

6. Méthode selon l'une quelconque des revendications précédentes, dans lequel le premier et le deuxième signal de référence sont un signal sinusoïdal, un signal cosinusoïdal ou un signal carré.

7. Méthode selon l'une des revendications précédentes, dans lequel une valeur moyenne du signal de mesure est calculée par intervalle de temps en faisant la somme de toutes les valeurs de mesure dans l'intervalle de temps et en la divisant par le nombre d'opérandes de la somme.

8. Méthode selon l'une quelconque des revendications précédentes, dans lequel l'objet est balayé par la lumière.

9. Unité de calcul (200) conçue à cet effet,
échantillonner un signal de mesure (320) sur au moins une longueur de période correspondant à un nombre entier d'oscillations fondamentales d'un signal de modulation (310) à une fréquence d'échantillonnage correspondant à au moins quatre fois la fréquence d'une composante de fréquence sélectionnée, afin d'obtenir un certain nombre de valeurs de mesure,
multiplier chaque valeur de mesure par une valeur d'un premier et d'un deuxième signal de référence présents à l'instant de mesure respectif, afin d'obtenir respectivement une première et une deuxième valeur de produit par valeur de mesure,
le premier signal de référence ayant la composante de fréquence sélectionnée, le deuxième signal de référence étant identique au premier signal de référence et déphasé de 90° par rapport à celui-ci,
additionner les première et deuxième valeurs de produit respectivement sur la longueur de période correspondant à un nombre entier d'oscillations fondamentales du signal de modulation, afin d'obtenir une première et une deuxième valeur de somme de produit,
déterminer l'amplitude et/ou la phase du signal de mesure (220) à partir de la première et de la deuxième valeur de somme de produits.

10. Unité de calcul (200) selon la revendication 9 avec un dispositif de mémoire dans lequel sont enregistrées les valeurs du premier et du deuxième signal de référence.

11. Unité de calcul (200) selon la revendication 9 ou 10, qui est réalisée sous forme de FPGA.

12. Programme informatique qui fait en sorte qu'une unité de calcul
échantillonner un signal de mesure (320) sur au moins une longueur de période correspondant à un nombre entier d'oscillations fondamentales d'un signal de modulation (310) à une fréquence d'échantillonnage correspondant à au moins quatre fois la fréquence d'une composante de fréquence sélectionnée, afin d'obtenir un certain nombre de valeurs de mesure,
multiplier chaque valeur de mesure par une valeur d'un premier et d'un deuxième signal de référence présents à l'instant de mesure respectif, afin d'obtenir respectivement une première et une deuxième valeur de produit par valeur de mesure,
le premier signal de référence ayant la composante de fréquence sélectionnée, le deuxième signal de référence étant identique au premier signal de référence et étant déphasé de 90° par rapport à celui-ci,
additionner les première et deuxième valeurs de produit respectivement sur la longueur de période correspondant à un nombre entier d'oscillations fondamentales du signal de modulation, afin d'obtenir une première et une deuxième valeur de somme de produit,
déterminer l'amplitude et/ou la phase du signal de mesure (220) à partir de la première et de la deuxième valeur de somme de produits,
lorsqu'il est exécuté sur l'unité de calcul.

13. Support de stockage lisible par machine sur lequel est stocké un programme informatique selon la revendication 12.

14. Microscope avec
a source de lumière (120 ; 508) pour éclairer un objet avec une lumière modulée en puissance en fonction d'un signal de modulation (310) présentant au moins une composante de fréquence,
un dispositif de détection (140) pour détecter la puissance de la lumière provenant de l'objet et pour générer un signal de mesure (220) dépendant de la puissance lumineuse détectée, et
une unité de calcul (200) selon l'une quelconque des revendications 9 à 11.

15. Microscope selon la revendication 14, comprenant un dispositif de balayage pour balayer l'objet avec de la lumière.
